## Europäisches Patentamt

## European Patent Office

## Office européen des brevets

(19)

(11) Veröffentlichungsnummer: **0 069 849**
**B1**

(12) **EUROPÄISCHE PATENTSCHRIFT**

(45) Veröffentlichungstag der Patentschrift:
26.02.86

(51) Int. Cl.⁴: **B 65 G 53/46**

(21) Anmeldenummer: 82104589.5

(22) Anmeldetag: 26.05.82

(54) Zellenradförderschleuse zum Ein- oder Ausschleusen von Schüttgut in oder aus Fördersystemen.

(30) Priorität: 07.07.81 DE 3126696

(43) Veröffentlichungstag der Anmeldung:
19.01.83 Patentblatt 83/3

(45) Bekanntmachung des Hinweises auf die Patenterteilung:
26.02.86 Patentblatt 86/9

(84) Benannte Vertragsstaaten:
CH FR GB IT LI NL

(56) Entgegenhaltungen:
DE - A - 2 062 369
DE - B - 1 134 629
DE - C - 308 906
DE - C - 492 036
US - A - 3 301 605

(73) Patentinhaber: Hartmann Fördertechnik GmbH,
Kaiserleistrasse 43, D-6050 Offenbach (DE)

(72) Erfinder: Block, Werner, Eschstrasse 4,
D-6050 Offenbach (DE)

(74) Vertreter: Munderich, Paul, Dipl.-Ing., Frankfurter
Strasse 84, D-6466 Gründau-Rothenbergen (DE)

LIBER, STOCKHOLM 1986

## Beschreibung

Die Erfindung betrifft eine Zellenradförderschleuse zum Ein- oder Ausschleusen von Schüttgut in/oder aus Fördersystemen, wobei ein unterschiedliches Druckniveau zwischen Eintritts- und Austrittsseite der Zellenradschleuse aufrechtzuerhalten ist. Eine solche Einrichtung ist aus US-A- 3301 605 bekannt.

Zellenradförderschleusen, die beispielsweise zum Austrag aus Behältern oder dergleichen in oder aus offenen Systemen, z.B. Transportbehälter, oder in andere Auffangstationen, wie Transportgebinde oder dergleichen verwendet werden, sind einem zwischen dem Umfang des angetriebenen Zellenrades und dem feststehenden umgebenden Gehäuse durch gleitende Reibung bedingten Verschleiß unterworfen, der - abhängig von den abrasiven Eigenschaften des Schüttgutes - relativ hohe Wartungs- und Reparaturansprüche stellen kann. Eine Verbesserung der Verschleißsituation für offene, in unregelmäßigen Folgen austragende Vorrichtungen ist durch die DE-C-492 036 gegeben.

Zur Verwendung dieser Vorrichtung wird auf Spalte 1, Zeilen 14 bis 19 und zur Ausbildung auf den Abschluß der Trommel mit einem mit "annähernd" gleicher Geschwindigkeit beweglichen Band verwiesen.

Bei Verwendung von Zellenradförderschleusen für den Guteintrag in pneumatische Förderleitungen bei Druckbetrieb bzw. für den Austrag aus einer Saugleitung ist die Forderung nach einer guten Abdichtung zwischen Zellenrad und Gehäuse höher anzusetzen, um die Luftverluste des pneumatischen Systemes so gering als möglich zu halten.

In der Bearbeitung der Innenwand des Gehäuses und des Umfanges des Zellenrades muß aus diesem Grund sehr sorgfältig vorgegangen werden,d.h. beide Teile werden in der Regel geschliffen, wobei je nach Materialauswahl der Hauptverschleiß in das Zellenrad oder in das Gehäuse gelegt werden kann. (Vgl. in diesem Zusammenhang LUEGER, Roro-Ausgabe, Februar 1972, Band 16, Seite 488).

Abgesehen von diesen Verschleiß- oder Dichtungsproblemen, die man beispielsweise im Rahmen einer aufwendigen Konstruktion des Zellenrades durch austauschbare Schleißringe oder Schleißleisten beherrschen muß ist der durch die Reibung zwischen Gehäuse und Zellenrad bedingte Kraftbedarf für den Antrieb als weiterer Nachteil der bekannten Konzeptionen festzuhalten.

Diese Sachlage berücksichtigend ist es Aufgabe der Erfindung, eine Zellenradförderschleuse nach der eingangs beschriebenen Art zu nennen, bei der insbesondre eine gute Abdichtung zwischen Aufgabe- und Austragsseite gegeben und gleichfalls die Reibung und der Verschleiß, zwischen Zellenrad und umfassendem Gehäuse, auf ein Minimum beschränkt ist.

Die erfindungsgemäße Lösung dieser Aufgabe sieht vor, daß der Umfang des Zellenrades - mit Ausnahme des Aufgabe- und Austragsbereiches für das Schüttgut - durch zwei umlaufend antreibbare, jeweils mindestens durch zwei Bandtrommeln getragene Abdichtbänder abgeschlossen ist, wobei die Bandgeschwindigkeit der Abdichtbänder identisch mit der Umfangsgeschwindigkeit des Zellenrades ist, und daß zumindest in einem der im Aufgabe- oder Austragsbereich - und zwar zwischen der Peripherie der Seitenwände des Zellenrades, sowie dem über die einander zugerichteten Bandtrommeln geführten beiden Abdichtbänder gebildeten Freiräume ein den Aufgabe- oder Austragsschacht einschließend verbundenes Formstück eingebracht ist.

Dies bedeutet, daß die mit Umfangsgeschwindigkeit des Zellenrades umlaufenden Abdichtbänder die Gehäusewandung der Zellenradschleuse bilden und damit eine Reibung zwischen diesen Teilen ausgeschlossen ist.

Die sonst übliche Konstruktion des Zellenrades mit austauschbaren Schleißringen und -leisten entfällt.

Die ein- und/oder austragsseitige Abdichtung des zwischen den durch Abdichtbänder und dem zu dem Eintrags- und/oder Austragsschacht führenden Seitenwänden des Zellenrades gebildeten Freiräume wird durch die abdichtenden Formstücke gesichert, so daß ein Druckniveauausgleich zwischen Aufgabe und Austrag vermieden wird.

Eine eventuell notwendige zusätzliche Abdichtung wird dadurch erreicht, daß das Formstück im weiteren jeweils ein Teil der um die beiden Bandtrommeln geführten Abdichtbänder abdeckt.

Die von außen um das Zellenrad greifenden beiden umlaufenden Abdichtbänder sind leicht austauschbar, ein Gehäuse wird nicht benötigt. Das Zellenrad und die für die Bandführung erforderlichen Bandtrommeln können, z.B. in einer offenen Stahlrahmenkonstruktion, zugeordnet werden, deren Gewicht wesentliche geringer als das eines entsprechend großen feststehenden Gehäuses ist, wobei die Vorteile in dieser Beziehung mit zunehmender Größe der Zellenradschleuse anwachsen.

In der Regel ist vorgesehen, daß die Abdichtbänder in bekannter Weise kraftschlüssig durch die beidseitigen Ränder des Zellenradumfanges angetrieben sind; sie können aber auch durch Formschluß mit dem Zellenrad angetrieben werden.

Jedes Abdichtband wird, wie erwähnt, mindestens durch zwei Bandtrommeln getragen, und, wie üblich, jedes Abdichtband durch eine weitere mitlaufende Rolle nachspannbar ausgebildet.

In der Regel weisen die Abdichtbänder und die Formstücke ein elastisches Verhalten auf, d.h. es wird übliches, aus Elastomere bestehendes Förderbandmaterial verwendet.

Die elastische Begrenzung des Zellenrades durch Abdichtbänder erlaubt die problemlose Mitförderung von Fremkörpern bis zu einer gewissen Größe, da der Gurt notfalls nachgeben kann.

Eine solche Ausbildung bietet eine ausreichende Abdichtung beim Guteintrag in eine pneumatische Förderleitung bei Druckbetrieb bzw. beim Austrag aus einer Saugleitung.

Die Erfindung wird durch die beigefügte zeichnerische Darstellung einer beispielsweisen Ausführung näher erläutert.

Figur 1 zeigt die Zellenradförderschleuse im System bei gegenüberliegendem Aufgabe- und Austragsbereich.

Figur 2 zeigt die Ausbildung des Aufgabebereiches zur Anordnung eines dem Zellenrad und den Abdichtbändern aufliegenden Formstückes in Verbindung mit einem Aufgabeschacht im Halbschnitt.

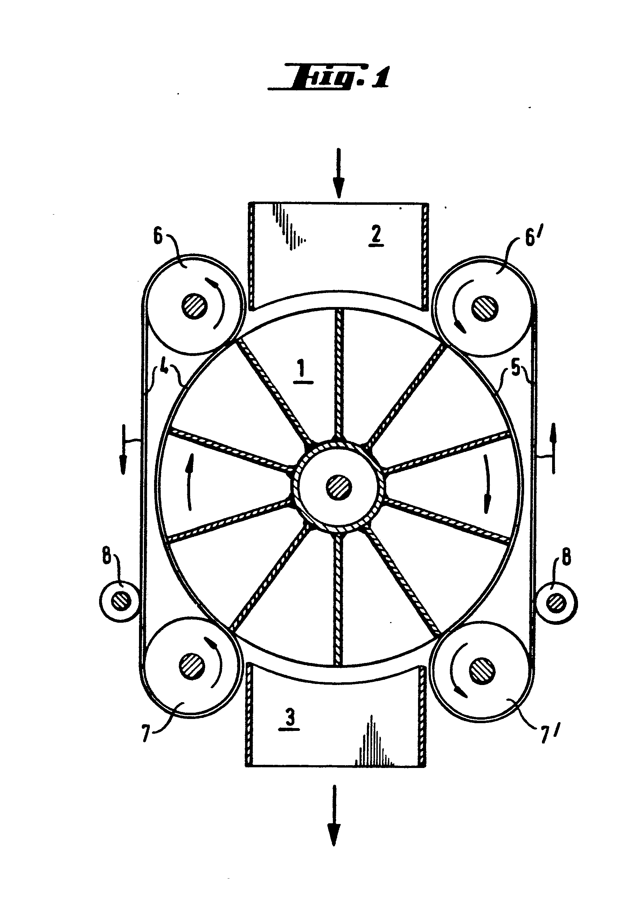

Das durch Figur 1 erläuterte grundsätzliche System sieht die Anordnung eines Zellenrades 1 vor, dessen Peripherie, mit Ausnahme des Aufgabe- und Austragsbereiches 2 und 3, in diesem Fall durch zwei umlaufende, spiegelbildlich angeordnete Abdichtbänder 4/5 dichtend abgedeckt sind.

Der Antrieb dieser auf je zwei Bandtrommelpaaren 6/7 und 6'/7' angeordneten Abdichtbänder erfolgt entweder kraftschlüssig durch die Peripherie des Zellenrades 1 oder aber formschlüssig mit dessen Antrieb.

Das Zellenrad 1 und die Bandtrommeln 6/7 und 6'/7' sind in einem nicht gezeichneten, in der Regel offenen, geschweißten Stahlrahmen gelagert.

Gegen die Abdichtbänder 4 und 5 ist jeweils eine nachspannbare Rolle 8 gerichtet, so daß der abdichtende Effekt dieser Bänder über eine lange Betriebszeit einstellbar bleibt.

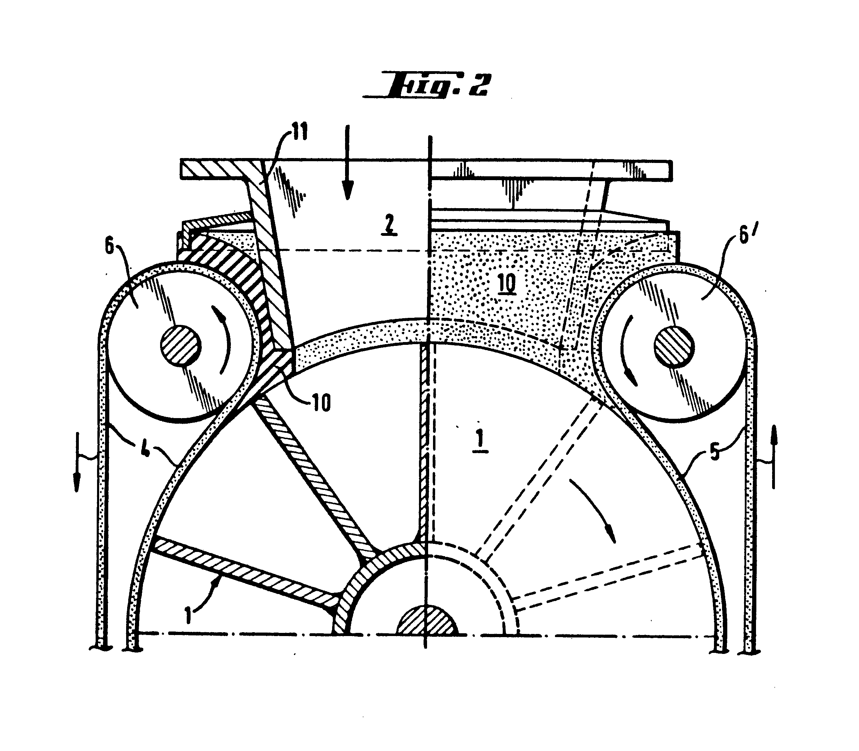

Durch Figur 2 ist eine abdichtende Ausbildung des Aufgabebereiches dargestellt. Der elastisch ausgebildete, mit seinem zum Zellenrad 1 weisende Bereich des Formstückes 10 ist beidseitig mit Lappen ausgerüstet, die in die beiden durch die peripherie des Zellenrades und durch die Abdichtbänder 4 und 5 gebildeten Spalten greifen und liegt im übrigen im Bereich seiner Durchführungsöffnung für das Gut der Peripherie der das Zellenrad seitlich begrenzenden Scheiben an.

In der anderen Richtung, d.h. in Aufgaberichtung, liegt das Formstück 10 den auf den Bandrollen 6 und 6' geführten Abdichtbändern auf.

Durch das Formstück 10 ist der Aufgabeschacht 11 geführt und diesem, beispielsweisen durch Kleben oder Vulkanisation, verbunden.

## Patentansprüche

1. Zellenradförderschleuse zum Ein- oder Ausschleusen von Schüttgut in/oder aus Fördersystemen, wobei ein unterschiedliches Druckniveau zwischen Eintritts- (2) und Austrittsseite (3) der Zellenradschleuse aufrechtzuerhalten ist, dadurch gekennzeichnet, daß der Umfang des Zellenrades (1) - mit Ausnahme des Aufgabe- und Austragsbereiches (2/3) für das Schüttgut - durch zwei umlaufend antreibbare, jeweils mindestens durch zwei Bandtrommeln (6/7, 6'/7') getragene Abdichtbänder (4/5) abgeschlossen ist, wobei die Bandgeschwindigkeit der Abdichtbänder identisch mit der Umfangsgeschwindigkeit des Zellenrades (1) ist, und daß zumindest in einem der im Aufgabe- oder Austragsbereich (2/3) - und zwar zwischen der periphere der Seitenwände des Zellenrades (1) sowie dem über die einander zugerichteten Bandtrommeln (6/6' und/oder 7/7') geführten beiden Abdichtbänder (4/5) gebildeten Freiräume, ein den Aufgabe- oder Austragsschacht (11) einschließend verbundenes Formstück (10) eingebracht ist.

2. Zellenradförderschleuse nach Anspruch 1, dadurch gekennzeichnet, daß das Formstück (10) im weiteren jeweils ein Teil der um die beiden Bandtrommeln (6/6' oder 7/7') geführten Abdichtbänder (4/5) abdeckt.

3. Zellenradförderschleuse nach Anspruch 1, dadurch gekennzeichnet, daß die Abdichtbänder (4/5) und das bzw. die Formstück(e) (10) aus einem elastischen Werkstoff hergestellt sind.

## Claims

1. A star feeder sluice for locking bulk material into and out of feeder systems, with different pressure levels being required to be maintained between the inlet side (2) and the outlet side (3) of the star feeder sluice, characterized in that the circumference of the star feeder (1), with the exception of the applying and discharging areas (2/3) for the bulk material, are sealed by two circumferentially drivable sealing bands (4/5) respectively carried at least by two band drums (6/7, 6'/7'), with the band speed of the sealing bands being identical with the circumferential speed of the star feeder (1), that a shaped member (10) enclosingly connected to the applying and discharging shaft (11) is introduced into at least one of the free spaced formed in the applying and discharging areas (2/3), i.e. formed between the periphery of the side walls of the star feeder (1), and the two sealing bands (4/5) guided over the facing drum bands (6/6' and 7/7').

2. A star feeder sluice according to claim 1, characterized in that the shaped member (10), furthermore, respectively covers a part of the sealing bands (4/5) guided about the two band drums (6/6' and 7/7').

3. A star feeder sluice according to claim 1, characterized in that the sealing bands (4/5) and the shaped member(s) is (are) made of a flexible material.

## Revendications

1. Ecluse de transport à roue cellulaire pour écluser des matières en tas dans ou lors des systemes de transport, un niveau de pression différent entre le côté d'entrée (2) et le côté de sortie (3) de l'écluse à roue cellulaire êtant à maintenir, caractérisé en ce que la circonférence de la roue cellulaire (1) - à l'exception de portée d'entrée et de sortie (2/3) pour les matières en tasest bouchée par deux rubans bouchants (4/5) actionnables périphériquement et chancun porté au moins par deux tambours de ruban (6/6; 7/7'), la vitesse des rubans bouchants êtant identique avec la vitesse circonférentiell de la roue cellulaire, et

qu'une pièce façonnée (10) solidaire au puits (11) d'entrée ou de sortie dans une manière incluante est introduite au moins dans une espace libre formée dans la portée d'entrée ou de sortie (2/3) - notemment entre la péripherie des faces latérales de la roue cellulaire (1) et des deux rubans bouchants (4/5) guidés par l'intermédiaire des tambours de rubans (6,6', 7/7') tournés l'un vers l'autre.

2. Ecluse de transport à roue cellulaire suivant le revendication 1, caractérisé en ce que la pièce façonnée (10), en outre, couvre chaque fois une partie des rubans bouchants (4/5) guidés autour les deux tambours de ruban (6/6', 7/7').

3. Ecluse de transport à roue cellulaire suivant la revendication 1, caractérisé en ce que les rubans bouchants (4/5) et la pièce façonnée (ou les pièces façonnées) est/ sont fabriquée(s) de matière élastique.

# Fig. 1

Fig. 2